Europäisches Patentamt

European Patent Office

Office européen des brevets

(11) Veröffentlichungsnummer: **0 337 519**

**A2**

(12) # EUROPÄISCHE PATENTANMELDUNG

(21) Anmeldenummer: **89200512.5**

(51) Int. Cl.4: **F16K 3/24** , **F16K 25/02** , **F16K 37/00**

(22) Anmeldetag: **17.01.89**

(30) Priorität: **20.01.88 DE 3801569**
**20.01.88 DE 3801561**

(43) Veröffentlichungstag der Anmeldung:
**18.10.89 Patentblatt 89/42**

(84) Benannte Vertragsstaaten:
**ES**

(71) Anmelder: **Mieth, Hans Otto, Dipl.-Ing.**
**Sandkrug 3**
**D-2058 Schnakenbek(DE)**

(72) Erfinder: **Mieth, Hans Otto Dipl. Ing.**
**Sandkrug 3**
**D-2058 Schnakenbek(DE)**
Erfinder: **Schlotterbeck, Erich**
**Pflasterstrasse 4A**
**D-2053 Schwarzenbek(DE)**

(74) Vertreter: **Glaeser, Joachim, Dipl.-Ing. et al**
**Patentanwalt Königstrasse 28**
**D-2000 Hamburg 50(DE)**

(54) Verfahren und Vorrichtng zum Schutz und zur Stützung einer Dichtung einer Ventilvorrichtung.

(57) Die Erfindung betrifft ein Verfahren und eine Vorrichtung zum Schutz und zur Stützung einer Dichtung einer Ventilvorrichtung, mit einem schieberartig ausgebildeten, translatorisch oder rotativ verschiebbaren Schließglied, einem hierzu korrespondierenden Sitzbereich der Ventilgehäuseteile und einem Verschlußteil, welches in Richtung des Bewegungsfreiheitsgrades des Schließgliedes verschiebbar ist, und einer Dichtung bzw. Abdichtungsstelle, die entweder zwischen Schließglied und Sitzbereich wirksam ist oder mit dem Verschlußteil zusammen wirkt.

Durch das vorgeschlagene Verfahren und die Vorrichtung zu seiner Realisierung wird unter anderem sichergestellt, daß bei einer Ventilvorrichtung der einleitend gekennzeichneten Gattung die Dichtung in anderen Stellungen als in der Schließstellung geschützt und gestützt ist.

Dies wird unter anderem verfahrenstechnisch dadurch erreicht, daß die in der Schließstellung der Ventilvorrichtung eine Dichtwirkung erzeugendee Beanspruchung der Dichtung bzw. Abdichtungsstelle in anderen Stellungen als in der Schließstellung durch das Verschlußteil hervorgerufen wird.

Fig. 2

# Verfahren und Vorrichtung zum Schutz und zur Stützung einer Dichtung einer Ventilvorrichtung

Die Erfindung betrifft ein Verfahren und eine Vorrichtung zum Schutz und zur Stützung einer Dichtung einer Ventilvorrichtung nach dem Oberbegriff des Anspruches 1.

Eine Ventilvorrichtung der einleitend gekennzeichneten Gattung ist aus der DE-A-37 01 027 und auch aus der europäischen Patentanmeldung 02 79 177 bekannt. Dabei geht der Gegenstand der vorgenannten Patentanmeldungen gemäß dem jeweiligen Oberbegriff des Hauptanspruches von einem Ventil mit Leckageraum aus, welches mit zwei Abdichtungsstellen ausgestattet ist, die seriell angeordnet sind und in der Schließstellung des Ventils das Überströmen von Fluiden von einem Ventilgehäuseteil in ein anderes verhindern. Bei der letztgenannten Patentanmeldung werden die zwei Abdichtungsstellen unter anderem durch eine Dichtungsanordnung mit zwei voneinander getrennten, ventilgehäuseseitig angeordneten Dichtungen realisiert, wobei diese beiden diskreten Dichtungen unter anderem als Dichtungen mit kreisförmigem Querschnitt ausgebildet sind. Der Leckageraum ist bei den beiden bekannten Ventilen zwischen den Abdichtungsstellen angeordnet und über das Ventilgehäuse mit der Umgebung des Ventils verbunden. Mit diesen sogenannten Doppelsitzventilen wird die verfahrenstechnische Aufgabe gelöst, neben der in der Schließstellung des Ventils an sich bekannten Steuerung des Mediumeintritts vom Innenraum des Ventils zum Leckageraum, diesen Eintritt auch in anderen Stellungen des Ventils zu steuern. Die Lösung der verfahrenstechnischen Aufgabe gelingt dadurch, daß der Mediumeintritt vom Innenraum zum Leckageraum in anderen Stellungen als in der Schließstellung des Ventils wirkungsmäßig in gleicher Weise wie in der Schließstellung durch eine das Schließglied hinsichtlich seiner Wechselwirkung mit dem Leckageraum substituierende Vorkehrung gesteuert wird. Hinsichtlich der gegenständlichen Realisierung ist unter anderem ein Verschlußteil vorgesehen, das einen Innendurchgang aufweist und das zu dem Schließglied relativ beweglich in Richtung dessen Bewegungsfreiheitsgrades angeordnet ist. Dabei hat, zumindest in der Offenstellung des Ventils, das Verschlußteil permanent Kontakt mit den beiden Abdichtungsstellen bzw. den beiden Dichtungen.

Das bekannte Verschlußteil ist stets und in allen Anwendungsfällen im Zusammenwirken mit zwei Dichtungen bzw. Abdichtungsstellen zu sehen und es steuert bestimmungsgemäß allein den Mediumeintritt vom Innenraum zum Leckageraum zwischen den beiden Dichtungen bzw. Abdichtungsstellen.

Bei den bekannten Ventilen übernimmt das Verschlußteil in anderen Stellungen als in der Schließstellung des Ventils den Schutz und die Stützung der beiden Dichtungen bzw. Abdichtungsstellen, falls diese durch ventilgehäuseseitig angeordnete Dichtungsmittel realisiert werden. Für schließgliedseitig angeordnete Dichtungen bietet das bekannte Verschlußteil in seiner vorgeschlagenen Anordnung und Wirkungsweise keinen Schutz und keine Stützung.

Ausgehend vom aufgezeigten Stand der Technik ist es Aufgabe der vorliegenden Erfindung, bei einer Ventilvorrichtung der einleitend gekennzeichneten Gattung einen Schutz und eine Stützung der Dichtung in anderen Stellungen als in der Schließstellung sicherzustellen. Hierbei sollen hauptsächlich Lösungen aufgezeigt werden, die insbesondere schließgliedseitig angeordnete Dichtungen schützen und stützen.

Die Aufgabe wird durch die Kennzeichenmerkmale des Anspruchs 1 gelöst. Die Anwendung des erfindungsgemäßen Verfahrens gemäß Unteranspruch 2 auf heute übliche Ventile stattet diese mit Schaltfunktionen und Eigenschaften aus, die neu und vorteilhaft sind.

Vorteilhafte Ausführungsformen der Ventilvorrichtung zur Durchführung des vorgenannten Verfahrens sind in den Unteransprüchen 3 bis 8 beschrieben.

Die mit der Erfindung erzielten Vorteile bestehen zum einen insbesondere darin, daß das aus der DE-A-37 01 027 und der EP-02 79 177 bekannte Wirkungsprinzip zwischen Verschlußteil und ventilgehäuseseitig angeordneten Dichtungen konsequent auf Ventile einfachster Bauart mit einer einzigen Auf-/Zu-Funktion einerseits und auf komplexe Ventilvorrichtungen mit den verschiedensten Schaltfunktionen und Eigenschaften andererseits übertragen und angewendet wird. So ist es erstmals möglich, eine Dichtung mit kreisförmigem Querschnitt, einen sogenannten O-Ring, die zwar ein konstruktiv einfaches, insbesondere jedoch bei ventilgehäuseseitiger Anordnung ein nicht unproblematisches Dichtungselement darstellt, begrenzt beweglich in einer gehäuseseitigen Nut anzuordnen, da auch in der Offenstellung des Ventils diese Dichtung durch das Verschlußteil in einer Lage fixiert wird, die ihrer Lage in der Schließstellung des Ventils adäquat ist. Sie wird dadurch auch in der Offenstellung des Ventils der mechanischen Beanspruchung durch das Strömungsmittel entzogen. Bei bekannten Dichtungsanordnungen liegt die gehäuseseitig angeordnete Dichtung in der Offenstellung des Ventils zum Innenraum des Ventilgehäuses hin vollständig offen. Sie ist Strömungskräften, Korrosion und Erosion des Strömungsmittels, zumindest auf ihrer dem Innenraum des Ventilgehäuses zugewandten Oberfläche, ungeschützt unterworfen.

Ohne besondere Maßnahmen lassen sich lose Dichtungsanordnungen mit bekannten Mitteln nicht befriedigend lösen. Derartige lose Dichtungsanordnungen sind aber aus biologischen und reinigungstechnischen Gründen beispielsweise in den Vereinigten Staaten von Amerika als Standardlösungen zwingend vorgesehen, wobei dort das Problem durch die Hinnahme der vorstehend beschriebenen mechanischen Instabilität der Dichtung oder durch Armierung der Dichtung oder Anordnung in einem Käfig auf bislang allseits unbefriedigende Weise gelöst wird. Die vorliegende Erfindung löst das bestehende Problem im Zusammenhang mit dem lose angeordneten Dichtungsring mit relativ einfachen Mitteln.

Die vorgeschlagene Erfindung zeigt aber auch auf, wie das aus den vorgenannten Patentanmeldungen bekannte Wechselwirkungsprinzip zwischen Verschlußteil einerseits und Ventilgehäuse, den beiden Dichtungen bzw. Abdichtungsstellen und dem Leckageraum andererseits nunmehr in Analogie durch ein Wechselwirkungsprinzip zwischen dem Verschlußteil einerseits und dem Schließglied, der Dichtung bzw. den Dichtungen und gegebenenfalls einem Leckageraum andererseits ersetzt wird. Dabei wird zum einen erreicht, daß das Verschlußteil in anderen Stellungen als in der Schließstellung des Ventils eine schließgliedseitig angeordnete Dichtung oder auch deren zwei schützt und stützt. Falls zwischen den beiden schließgliedseitig angeordneten Dichtungen ein Leckageraum angeordnet ist, so wird auch hier der Mediumeintritt vom Innenraum zum Leckageraum in anderen Stellungen als in der Schließstellung des Ventils wirkungsmäßig in gleicher Weise wie in der Schließstellung durch eine das Schließglied hinsichtlich seiner Wechselwirkung mit dem Leckageraum substituierenden Vorkehrung gesteuert.

Die letztgenannte, neugeschaffene Ventilvorrichtung vermag sämtliche bekannten Problemstellungen, wie sie ausführlich in den vorgenannten Patentanmeldungen dargestellt sind, ebenfalls zu lösen. Die verschiedensten Lösungsverfahren und Lösungsmerkmale werden dort genannt. Sie sind sinngemäß und in naheliegender Weise auf die neugeschaffene Ventilvorrichtung übertragbar.

Da das erfindungsgemäß vorgeschlagene Wechselwirkungsprinzip zwischen Verschlußteil und Schließglied eine Umschlingung des Schließgliedes durch das Verschlußteil in der Offenstellung der Ventilvorrichtung ergibt, entfällt für das Verschlußteil das aus den bekannten Ventilvorrichtungen zu entnehmende Merkmal des zwingend erforderlichen sogenannten "Innendurchgangs". Das Verschlußteil wird nunmehr in der Offenstellung der Ventilvorrichtung nicht mehr vom Strömungsmittel durchströmt. Dadurch ergibt sich ein Vorteil, der darin besteht, daß der Sitzbereich hinsichtlich seines Durchtritts-Querschnittes nicht mehr durch den Ringquerschnitt des Verschlußteils verengt wird. Ein weiterer Vorteil ist darin zu sehen, daß das Verschlußteil auf oder am Schließglied geführt wird, mit dem es in der Offenstellung der Ventilvorrichtung eine Paarung bildet. Bei der bekannten Ventilvorrichtung erfolgt die Führung des Verschlußteils zwar auch am oder auf dem Schließglied, die Paarung wird jedoch mit dem Sitzbereich des Ventilgehäuses vollzogen. Insofern ergeben sich mit der erfindungsgemäßen Vorrichtung geringere Anforderungen an die Führungsqualität bzw. an eine fluchtende Anordnung zwischen Schließgliedachse und Ventilgehäuse.

Zwei schließgliedseitig angeordnete Dichtungen, zwischen denen ein Leckageraum angeordnet ist, der über Leitungen mit der Umgebung der Ventilvorrichtung verbunden ist, lassen sich mit den aus den vorgenannten Patentanmeldungen bekannten Mitteln sowohl in der Schließ- als auch in der Offenstellung der Ventilvorrichtung reinigen. Die Reinigung einer einzigen Dichtung, die entweder ventilgehäuseseitig oder schließgliedseitig angeordnet ist und die erfindungsgemäß in allen Stellungen des Ventils gegenüber dem Innenraum des Ventilgehäuses abgedeckt ist, ist nach einer vorteilhaften Ausführungsform der Ventilvorrichtung gemäß der Erfindung dadurch gegeben, daß das Verschlußteil im Bereich seiner Überdeckung mit der Dichtung vom Innenraum des Ventilgehäuses zur Dichtung hin durchlässig ausgebildet ist. Da das Verschlußteil in diesem Falle keine Abdichtungsfunktion zu übernehmen hat, sondern lediglich die Dichtung in ihrer gehäuseseitigen Lage in der Offenstellung des Ventils schützen und stützen soll, kann es beispielsweise mit einer Vielzahl von Durchbrüchen versehen sein.

Durch eine weitere Ausgestaltung der Ventilvorrichtung gemäß der Erfindung erreicht man die Reinigungsfähigkeit der einzigen Dichtung vom Innenraum des Ventilgehäuseteils aus dadurch, daß das Verschlußteil in Richtung seiner Schaltbeweglichkeit derart bemessen ist, daß eine räumliche Verbindung zwischen dem Innenraum des Ventilgehäuses und den die Dichtung umgebenden Wandungen gegeben ist. Diese reinigungstechnisch bedingte Bemessungsnotwendigkeit führt zu einem sehr flach ausgebildeten Verschlußteil.

Anhand der nachfolgend kurz erläuterten Figuren der Zeichnung wird der Anmeldungsgegenstand in seinen wesentlichen Merkmalen beispielhaft dargestellt und hinsichtlich seiner Wirkungsweise beschrieben. Es werden folgende Kennzeichen und Bezeichnungen verwendet (s. Liste):

Es zeigen:

**Figur 1** in vereinfachter schematischer Darstellung einen Mittelschnitt durch eine Ventilvorrichtung gemäß der Erfindung mit einer im Schließglied angeordneten Dichtung in der Schließ- und in der Offenstellung (linksseitige bzw. rechtsseitige Darstellung);

**Figur 2** einen Mittelschnitt durch eine andere Ausführungsform der Ventilvorrichtung gemäß der Erfindung mit zwei schließgliedseitig angeordneten Dichtungen und einem dazwischen angeordneten Leckageraum, ebenfalls in der Schließ- und der Offenstellung;

**Figur 3 und Figur 4** einen Mittelschnitt durch eine Ausführungsform gemäß Figur 1 mit einer begrenzt beweglich angeordneten Dichtung in der Schließ- und in der Offenstellung;

**Figur 5 und Figur 6** einen Mittelschnitt durch eine Ausführungsform gemäß Figur 2 mit einem Reinigungsmittelzulauf zum Leckageraum in der Schließ- und in der Offenstellung des Ventils;

**Figur 7** eine Ausführungsform gemäß Figuren 5 und 6 mit einem abgewandelten Reinigungsmittelzulauf und -ablauf;

**Figuren 8 bis 11** jeweils einen Mittelschnitt durch eine Ventilvorrichtung gemäß den Figuren 5 und 6 mit begrenzt beweglichen Dichtungen und unterschiedlich ausgestaltetem Zulauf für das Reinigungsmittel und Ablauf für das Reinigungsmittel bzw. die Leckage;

**Figur 12** einen Mittelschnitt durch eine andere Ausführungsform der Ventilvorrichtung gemäß der Erfindung mit einer ventilgehäuseseitig angeordneten Dichtung in der Schließ-und der Offenstellung (linksseitige bzw. rechtsseitige Darstellung).

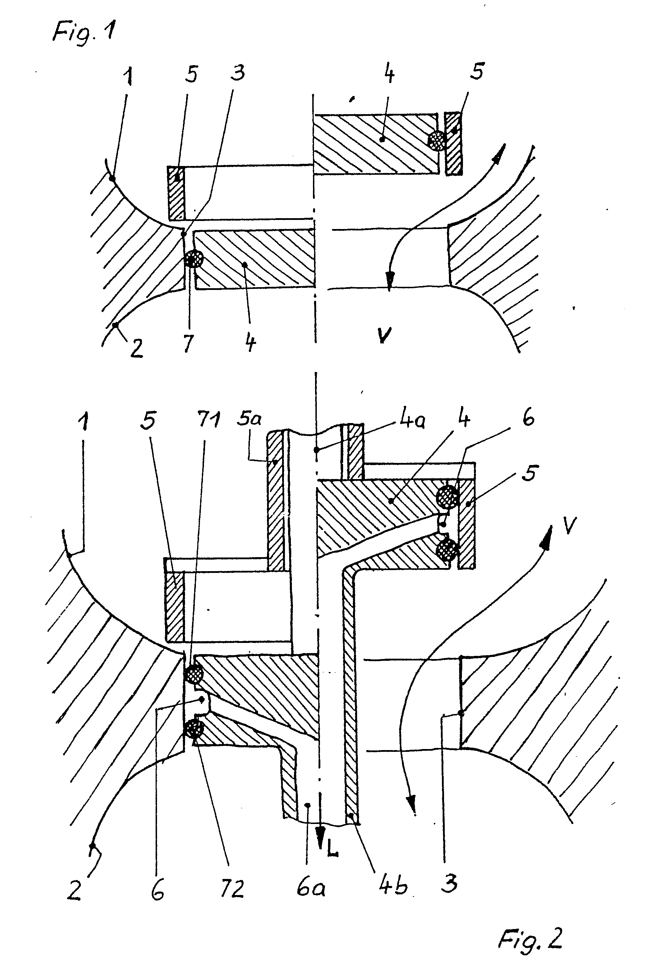

Aus Figur 1 ist das vorgenannte Substitutionsprinzip von einem Verschlußteil 5 und einem Sitzbereich 3 eines Ventilgehäuses 1,2 gegenüber einem Schließglied 4 und dessen Dichtung 7 erkennbar. In der linksseitigen Darstellung ist die Schließstellung der Ventilvorrichtung gezeigt, wobei auf eine Darstellung der Mittel zur Betätigung des Schließgliedes 4 und des Verschlußteiles 5 verzichtet wurde. Der Sitzbereich 3 steht in Wechselwirkung mit dem Schließglied 4 und seiner Dichtung 7. In der Offenstellung der Ventilvorrichtung (rechtsseitige Darstellung) wird die Wirkung des Sitzbereiches 3 in Bezug auf die Dichtung 7 durch das Verschlußteil 5 substituiert. Die in der Schließstellung der Ventilvorrichtung eine Dichtwirkung erzeugte Beanspruchung der Dichtung 7 wird in anderen Stellungen als in der Schließstellung durch das Verschlußteil 5 hervorgerufen. In der Offenstellung der Ventilvorrichtung gelangt eine Durchtrittsströmung V vom Ventilgehäuseteil 1 in das Ventilgehäuseteil 2 oder umgekehrt. Das Verschlußteil 5 weist hinsichtlich seiner das Schließglied 4 aufnehmenden Bohrung die gleiche Abmessung D auf, wie die Verbindungsbohrung der Ventilgehäuseteile 1,2 in ihrem Sitzbereich 3. Bei der schematisch dargestellten Ventilvorrichtung handelt es sich um ein Absperrventil mit Auf/Zu-Funktion.

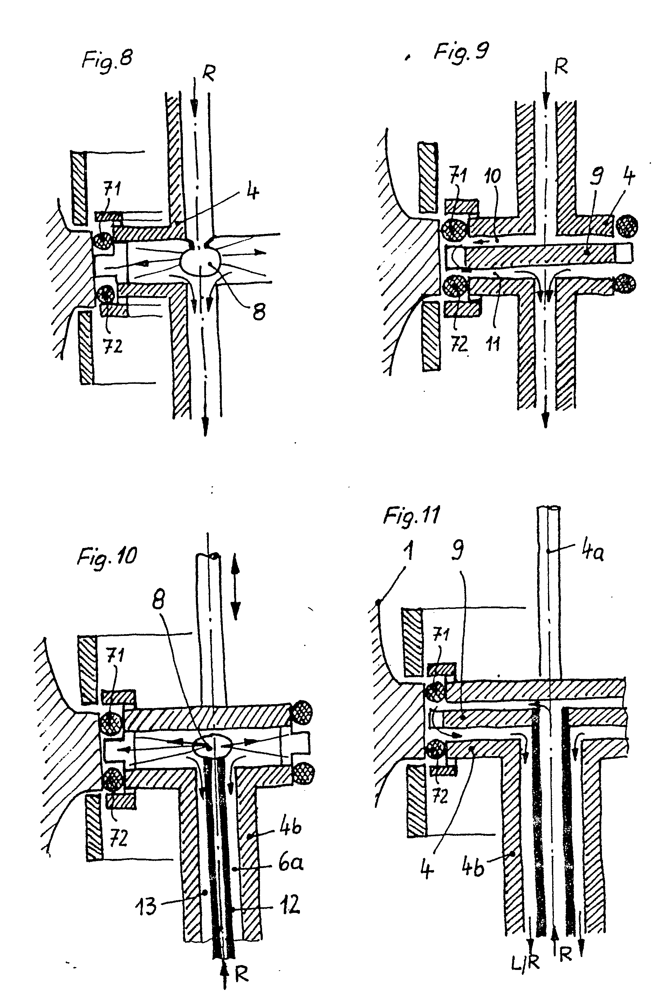

Das Schließglied 4 wurde bei der Ausführungsform gemäß Figur 2 gegenüber jener gemäß Figur 1 dahingehend abgewandelt, daß nunmehr zwei Dichtungen 71, 72 vorgesehen sind, die einen Leckageraum 6 zwischen sich aufnehmen. Dieser Leckageraum 6 wird in der Schließstellung der Ventilvorrichtung einerseits von dem Ventilgehäuseteil 1,2 berandet, und er ist andererseits über eine Ablaufbohrung 6a, die innerhalb des Schließgliedes 4 angeordnet ist, mit der Umgebung der Ventilvorrichtung verbunden. Für die Anordnung der Ablaufbohrung 6a innerhalb des Schließgliedes 4 sind eine Reihe von Lösungen bekannt, z. B. kann die Ablaufbohrung 6a in einem Ablaufrohr 4b, das mit dem Schließglied 4 verbunden und aus dem Ventilgehäuseteil 2 herausgeführt ist, angeordnet werden. Ebenso ist die Umkehrung denkbar, indem das Ablaufrohr 4b auf der Seite des Ventilgehäuseteils 1 angeordnet und aus diesem in die Umgebung des Ventils herausgeführt ist. Im letztgenannten Fall befindet sich die Ablaufbohrung 6a dann in einer ersten Stange 4a, mit der das Schließglied 4 betätigt wird. Weitere Ausgestaltungen der Ventilvorrichtung hinsichtlich der Anordnung der Ablaufbohrung 6a ergeben sich auch aus den Figuren 8, 9, 10 und 11 (Ablaufbohrung 6a in einem nach unten herausgeführten Ablaufrohr 4b). Die rechtsseitige Darstellung der Figur 2 zeigt die leckagegesicherte Ventilvorrichtung in ihrer Offenstellung. Der Leckageraum 6 wird nunmehr außenseits von der inneren Mantelfläche des Verschlußteils 5 berandet. Sowohl in der Schließ- als auch in der Offenstellung der Ventilvorrichtung ist der Leckageraum 6 gegenüber dem Innenraum der Ventilgehäuseteile 1 bzw. 2 abgeschlossen. Man erkennt weiterhin, daß das Verschlußteil 5 in Bezug auf die Dichtungen 71 und 72 und in Bezug auf den Leckageraum 6 den Sitzbereich 3 der Ventilgehäuseteile 1 und 2 substituiert. Im Sitzbereich 3 kann ein in Figur 2 nicht dargestellter Sitzring angeordnet werden, der mit den vorstehend genannten gehäuseseitigen Funktionen gleichermaßen ausgestattet ist.

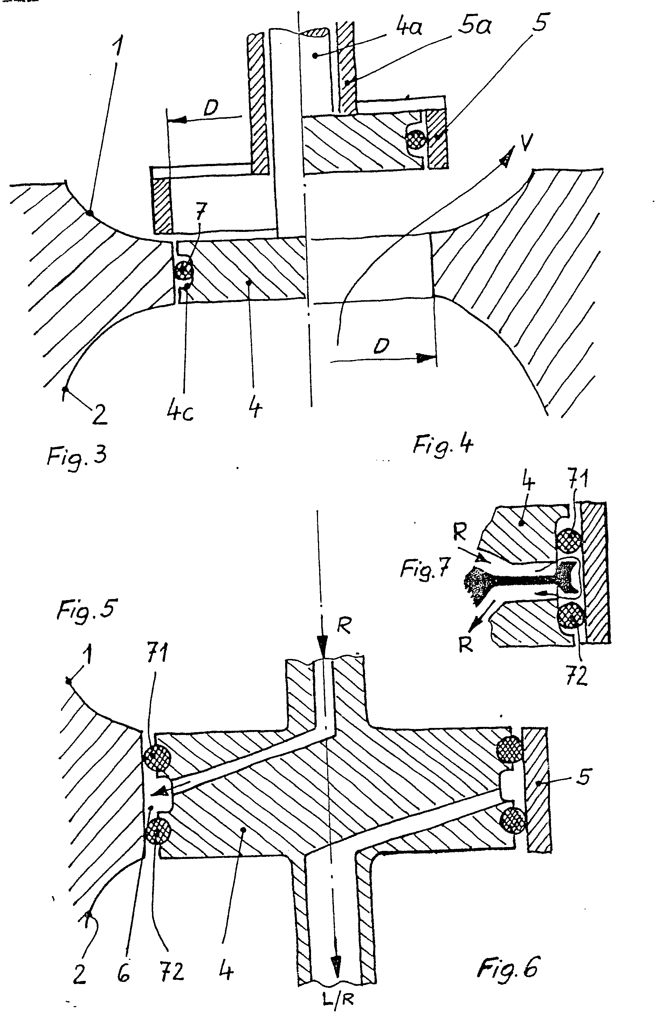

Im Gegensatz zur Ausführungsform gemäß Figur 1 ist bei der Ausführungsform gemäß den Figuren 3 und 4 eine sogenannte "lose" Dichtung 7 vorgesehen, die innerhalb einer Nut 4c des Schließgliedes 4 angeordnet ist. Die Dichtung 7 besitzt innerhalb der Nut 4c in Richtung der Schaltbewegung des Schließgliedes 4 eine begrenzte Beweglichkeit, wodurch die Reinigungsfähigkeit der kritischen Bereiche zwischen Dichtung 7 und Nut 4c erreicht wird. Eine Reinigung dieser Bereiche setzt allerdings voraus, daß das Verschlußteil 5 derart bemessen ist, daß eine räumliche Verbindung zwischen dem Innenraum der Ventilgehäuseteile 1,2 und den die Dichtung 7 umgebenden Wandungen gegeben ist. Mit 4a und 5a sind die erste Stange bzw. die zweite Stange zur Betätigung des Schließgliedes 4 bzw. des Verschlußteils 5 gekennzeichnet.

In den Figur 5, 6 und 7 ist ein Schließglied 4 dargestellt, welches in Übereinstimmung mit der entsprechenden Ausführungsform der Ventilvorrichtung gemäß Figur 2 mit zwei Dichtungen 71 und 72 ausgestattet ist, die zwischen sich einen Leckageraum 6 einschließen. Dieser Leckageraum 6 ist nicht nur, wie in Figur 2 dargestellt, über eine Ablaufbohrung 6a mit der Umgebung der Ventilvorrichtung verbunden, sondern er weist darüber hinaus einen zweiten Verbindungsweg zur Umgebung der Ventilvorrichtung auf, über den Reinigungsflüssigkeit in den Leckageraum 6 eingebracht werden kann. Die vorgenannte Art der Leckage- bzw. Reinigungsmittelabführung (in den Figuren 5 und 6 mit L/R bezeichnet) und die Reinigungsmittelzuführung R sind auch auf eine Dichtungsanordnung gemäß Ausführungsform nach Figur 7 anwendbar, in der die beiden Dichtungen 71 und 72 begrenzt beweglich im Schließglied 4 angeordnet sind. Diesbezügliche Lösungen sind der DE-A-37 01 027 und der EP-02 79 177 zu entnehmen. Darüber hinaus zeigen die Figuren 8, 9, 10 und 11 Lösungen auf, wie das Reinigungsmittel in den Leckageraum 6 eingeleitet bzw. diesem zugeführt wird.

Beispielsweise kann das Schließglied 4 als Hohlkörper zwischen den Dichtungen 71 und 72 ausgebildet sein (Figur 8), wobei die Reinigungsflüssigkeit über einer Verteil- und Spritzeinrichtung 8 dem Bereich der Dichtungen 71 und 72 zugeführt wird.

Der Bereich zwischen den Dichtungen 71 und 72 kann auch durch eine Trennwand 9 geteilt sein (Figur 9), die einen Zuführungsbereich 10 und einen Abführungsbereich 11 bildet, so daß das Reinigungsmittel R dem Dichtungsbereich zwangsweise zugeführt und ebenso aus diesem wieder abgeführt wird.

Bei der Ausführungsform gemäß Figur 10 ist ein Reinigungsrohr 12 mit der Verteil- und Spritzeinrichtung 8 in der Ablaufbohrung 6a des Ablaufrohres 4b angeordnet. Die Reinigungsflüssigkeit R wird dem Dichtungsbereich zugeführt und von dort über einen Ringspalt 13, gebildet zwischen der Innenwandung des Ablaufrohres 4b und dem Reinigungsrohr 12, abgeführt.

Die Ausführungsform gemäß Figur 11 entspricht in ihrem wesentlichen Aufbau jener gemäß Figur 9, wobei der Zulauf für die Reinigungsflüssigkeit R und der Ablauf für die Leckage- bzw. Reinigungsflüssigkeit L/R auf einer Seite des Schließgliedes 4 angeordnet sind. Der Antrieb des Schließgliedes 4 erfolgt entweder über die erste Stange 4a, die auf der dem Ablaufrohr 4b gegenüberliegenden Seite des Schließgliedes 4 angeordnet und aus dem Ventilgehäuseteil 1 herausgeführt ist oder, bei Verzicht auf die erste Stange 4a, über das Ablaufrohr 4b, wobei die Einbaulage der Ventilvorrichtung, wie in Figur 11 dargestellt, vorliegt oder aber eine um 180° gegenüber der dargestellten Anordnung gewählte Einbaulage.

Bei dem in den Figuren 2 und 5 bis 11 dargestellten Ausführungsformen der Ventilvorrichtung gemäß der Erfindung handelt es sich um jeweils ein sogenanntes leckagefrei schaltendes Doppelsitzventil. Falls das Verschlußteil 5 über Stege fest mit dem Ventilgehäuseteil 1 bzw. 2 verbunden ist, so ergibt sich eine Ventilvorrichtung, mit der ein leckagebegrenztes Schalten möglich ist. Die Verbindungsstege zwischen dem Verschlußteil 5 und dem Ventilgehäuseteil 1 bzw. 2 sind dabei mit Durchtrittsöffnungen, die näherungsweise dem Nennquerschnitt des Ventils entsprechen, zu versehen. Wirkungsweise und Funktion dieser Anordnung sind aus den vorgenannten Patentanmeldungen bekannt. Hier besteht eine sich unter den vielfältigen Aspekten und Betrachtungsweisen des vorliegenden Problems ergebende zwingende Analogie.

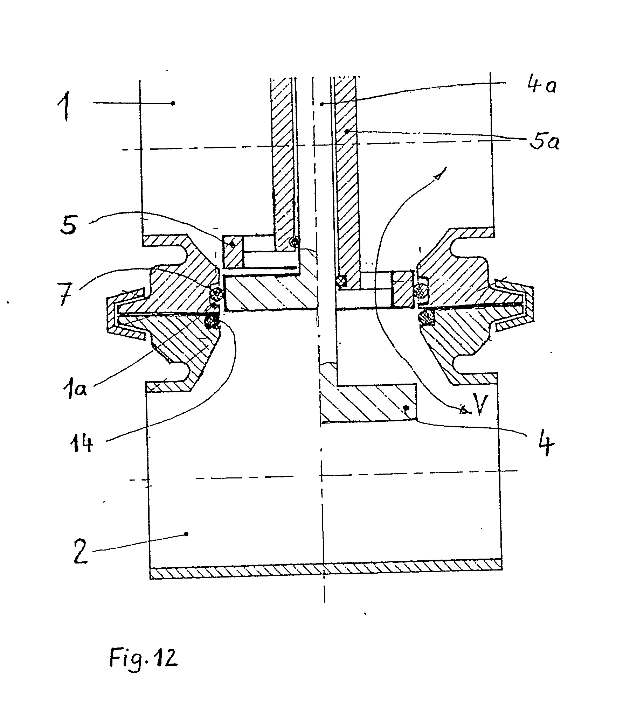

In Figur 12 ist eine Ventilvorrichtung gemäß der Erfindung dargestellt, die das der vorliegenden Erfindung zugrundeliegende Wirkungsprinzip des Verschlußteils 5 gegenüber einer gehäuseseitigen Dichtung 7 anhand der einfachsten Schaltfunktion, der Auf/Zu-Funktion, darstellt. Die linksseitige Darstellung zeigt die Schließstellung der Ventilvorrichtung, die rechtsseitige ihre Offenstellung. In der Schließstellung der Ventilvorrichtung wird die Dichtung 7, die mit axialem Spiel in einer Gehäusenut 1a eingebettet ist, in an sich bekannter Weise durch das Schließglied 4 fixiert. Der Einfachheit halber wurde die zwischen den Ventilgehäuseteilen 1 und 2 notwendige Gehäusedichtung 14 hinsichtlich ihrer Anordnung und Einbettung stark vereinfacht dargestellt. Das Wesen der Erfindung ergibt sich aus der Offenstellung der Ventilvorrichtung (rechtsseitige Darstellung), in der das Verschlußteil 5 die in der Schließstellung vom Schließglied 4 eingenommene Lage gegenüber der Dichtung 7 substituiert hat. In keiner der gezeigten Schaltzuständen, auch nicht in den nicht dargestellten Zwischenzuständen, ist die sogenannte "lose" Dichtung 7 dem mechanischen Angriff des Strömungsmittels ausgesetzt.

Die Dichtung 7 und die sie umgebende Gehäusenut 1a wird in der Offenstellung der Ventilvorrichtung für Reinigungsflüssigkeit zugängig, wenn das Verschlußteil 5 im Bereich seiner Überdeckung mit der Dichtung 7 vom Innenraum des Ventilgehäuses 1,2 zur Dichtung 7 hin durchlässig ausgebildet ist.

Beispielweise kann das Verschlußteil 5 mit einer Vielzahl von Öffnungen versehen sein, so daß es zum Beispiel die Form eines Käfigs besitzt. Es können aber auch von der Stirnseite des Verschlußteils 5 durchgehende Ausnehmungen vorgesehen werden, die den Zutritt von Reinigungsflüssigkeit zwischen der äußeren Mantelfläche des Verschlußteils 5 und der Dichtung 7 ermöglichen.

Wenn das Verschlußteil 5 in Richtung seiner, Schaltbeweglichkeit sehr kurz bemessen wird, so daß eine räumliche Verbindung zwischen dem Innenraum des Ventilgehäuses 1,2 und den die Dichtung 7 umgebenden Wandungen gegeben ist, dann ist in der Offenstellung der Ventilvorrichtung der Zutritt von Reinigungsflüssigkeit aus dem Innenraum des Ventilgehäuses 1,2 in den in Frage kommenden Dichtungsbereich möglich.

Liste der Bezeichnungen

1.2 Ventilgehäuseteil
1a Gehäusenut
3 Sitzbereich
4 Schließglied
4a erste Stange
4b Ablaufrohr
4c Nut
5 Verschlußteil
5a zweite Stange
6 Leckageraum
6a Ablaufbohrung
7 Dichtung
71 erste Dichtung
72 zweite Dichtung
8 Verteil- und Spritzeinrichtung
9 Trennwand
10 Zuführungsbereich
11 Abführungsbereich
12 Reinigungsrohr
13 Ringspalt
14 Gehäusedichtung
D Durchmesser des Sitzbereiches
L Leckageabfuhr/Leckage
R Reinigungsmittelzufuhr bzw. -abfuhr/Reinigungsmittel
V Durchtrittsströmung

**Ansprüche**

1. Verfahren zum Schutz und zur Stützung einer Dichtung einer Ventilvorrichtung, mit einem schieberartig ausgebildeten, translatorisch oder rotativ verschiebbaren Schließglied, einem hierzu korrespondierenden Sitzbereich der Ventilgehäuseteile und einem Verschlußteil, welches in Richtung des Bewegungsfreiheitsgrades des Schließgliedes verschiebbar ist, und einer Dichtung bzw. Abdichtungsstelle, die entweder zwischen Schließglied und Sitzbereich wirksam ist oder mit dem Verschlußteil zusammenwirkt, dadurch gekennzeichnet, daß die in der Schließstellung der Ventilvorrichtung eine Dichtwirkung erzeugende Beanspruchung der Dichtung bzw. Abdichtungsstelle in anderen Stellungen als in der Schließstellung durch das Verschlußteil hervorgerufen wird.

2. Verfahren nach Anspruch 1, dadurch gekennzeichnet, daß das Wirkungsprinzip des Verschlußteils angewendet wird auf heute übliche Ventile mit wenigstens einem Ventilgehäuseteil und mit Ventilteilen und -sitzen zum Öffnen und Abschließen der Fluidverbindungen zwischen den Ventilgehäuseteilen.

3. Ventilvorrichtung zur Durchführung des Verfahrens nach Anspruch 1 oder 2, wobei im Schließglied wenigstens eine Dichtung bzw. eine Abdichtungsstelle vorgesehen ist, dadurch gekennzeichnet, daß der in der Schließstellung mit der Dichtung (7) zusammenwirkende Sitzbereich (3) in anderen Stellungen als in der Schließstellung durch das Verschlußteil (5) substituiert wird (Figur 1).

4. Ventilvorrichtung zur Durchführung des Verfahrens nach Anspruch 1 oder 2, wobei im Schließglied zwei Dichtungen bzw. zwei Abdichtungsstellen vorgesehen sind, zwischen denen ein Leckageraum angeordnet ist, der durch mindestens eine im Schließglied angeordnete Leitung mit der Umgebung der Ventilvorrichtung und gegebenenfalls eine zweite Leitung mit einem Reinigungsmittelzulauf verbunden ist, dadurch gekennzeichnet, daß der in der Schließstellung mit den Dichtungen (71, 72) zusammenwirkende Sitzbereich (3) in anderen Stellungen als in der Schließstellung durch das Verschlußteil (5) substituiert wird (Figur 2).

5. Ventilvorrichtung zur Durchführung des Verfahrens nach Anspruch 1 oder 2, mit einer gehäuseseitig angeordneten Dichtung, dadurch gekennzeichnet, daß das in der Schließstellung mit der Dichtung (7) zusammenwirkende Schließglied (4) in anderen Stellungen als in der Schließstellung durch das Verschlußteil (5) substituiert wird (Figur 12).

6. Ventilvorrichtung nach einem der Ansprüche 3 bis 5, dadurch gekennzeichnet, daß die Dichtung (7; 70, 71) in den Richtungen der Schaltbewegung der Ventilvorrichtung eine begrenzte Beweglichkeit aufweist (Figur 3,4,7,12).

7. Ventilvorrichtung nach Anspruch 3 oder 5 oder 6, dadurch gekennzeichnet, daß das Verschlußteil (5) im Bereich seiner Überdeckung mit der Dichtung (7) vom Innenraum des Ventilgehäuses zur Dichtung hin durchlässig ausgebildet ist.

8. Ventilvorrichtung nach einem der Ansprüche 3 bis 6, dadurch gekennzeichnet, daß das Verschlußteil (5) in Richtung seiner Schaltbeweglichkeit derart bemessen ist, daß eine räumliche Verbindung zwischen dem Innenraum des Ventilgehäuses und den die in Dichtung (7; 71, 72) umgebenden Wandungen gegeben ist.

Fig. 1

Fig. 2

PCT 95 V73

Fig. 3

Fig. 4

Fig. 5

Fig. 7

Fig. 6

L/R

Fig.8

Fig.9

Fig.10

Fig.11

Fig. 12